(19) Europäisches Patentamt
European Patent Office
Office européen des brevets

(11) **EP 3 937 029 A2**

(12) **EUROPEAN PATENT APPLICATION**

(43) Date of publication:
**12.01.2022  Bulletin 2022/02**

(51) Int Cl.:
***G06F 16/55*** (2019.01)          ***G06F 16/535*** (2019.01)
***G06N 20/00*** (2019.01)

(21) Application number: **21210062.2**

(22) Date of filing: **23.11.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.11.2020  CN 202011330182**

(71) Applicant: **BEIJING BAIDU NETCOM SCIENCE TECHNOLOGY CO., LTD.**
**No.10 Shangdi 10th Street**
**Haidian District**
**Beijing 100085 (CN)**

(72) Inventors:
• **BIAN, Donghai**
 **Beijing, 100085 (CN)**
• **PENG, Weihua**
 **Beijing, 100085 (CN)**
• **LUO, Yu**
 **Beijing, 100085 (CN)**
• **JIANG, Shuai**
 **Beijing, 100085 (CN)**

(74) Representative: **Isarpatent**
**Patent- und Rechtsanwälte Barth**
**Charles Hassa Peckmann & Partner mbB**
**Friedrichstrasse 31**
**80801 München (DE)**

(54) **METHOD AND APPARATUS FOR TRAINING SEARCH MODEL, AND METHOD AND APPARATUS FOR SEARCHING FOR TARGET OBJECT**

(57)    A computer-implemented method and apparatus for training a search model, and a method and apparatus for searching for a target object are provided. The method may comprise: obtaining, by one or more computers, based on sample query information, a first sample data set used to train the search model. The method may further comprise: determining, by one or more computers, based on a pre-constructed knowledge base, additional query information associated with the sample query information. In addition, the method may further comprise: obtaining, by one or more computers, based on the additional query information, a second sample data set used to train the search model, wherein the second sample data set is different from the first sample data set. Moreover, the method may further comprise: training, by one or more computers, the search model based on the sample query information, the first sample data set, and the second sample data set.

400

*Fig. 4*

## Description

Technical Field

Aspects of the present disclosure mainly relate to the field of artificial intelligence, and more specifically to a method and apparatus for training a search model, a method and apparatus for searching for a target object, an electronic device, a computer-readable storage medium, and a computer program product.

Background

When a user searches for images, similar user query information (which is also referred to as query items, that is, "queries") may represent completely different categories. For example, "fashionable Korean sweaters" and "fashionable European and American sweaters" are both literally used to search for the user query information "sweaters", but actually, users are more concerned with sweaters of a particular style. A conventional image search method has no effective implementation in such fine-granularity classification. In addition, related data sets used to train an image search model are basically positive sample data. Therefore, the trained image search model is likely to have poor performance.

Summary

According to exemplary aspects of the present disclosure, a solution for training a search model is provided.

In a first aspect of the present disclosure, a method for training a search model is provided. The method may comprise: obtaining, based on sample query information, a first sample data set used to train the search model. The method may further comprise: determining, based on a pre-constructed knowledge base, additional query information associated with the sample query information. In addition, the method may further comprise: obtaining, based on the additional query information, a second sample data set used to train the search model, wherein the second sample data set is different from the first sample data set. Moreover, the method may further comprise: training the search model based on the sample query information, the first sample data set, and the second sample data set.

In a second aspect of the present disclosure, an apparatus for training a search model is provided, the apparatus comprising: a first sample data set obtaining module configured to obtain, based on sample query information, a first sample data set used to train the search model; an additional query information determination module configured to determine, based on a pre-constructed knowledge base, additional query information associated with the sample query information; a second sample data set obtaining module configured to obtain, based on the additional query information, a second sample data set used to train the search model, wherein the second sample data set is different from the first sample data set; and a search model training module configured to train the search model based on the sample query information, the first sample data set, and the second sample data set.

In a third aspect of the present disclosure, a method for searching for a target object is provided, the method comprising: obtaining a plurality of candidate target objects based on received user query information; determining, based on a search model trained based on the method according to the first aspect of the present disclosure, a probability that each of the plurality of candidate target objects is a hit for the user query information; and determining, as the target object, a candidate target object with a probability exceeding a probability threshold.

In a fourth aspect of the present disclosure, an apparatus for searching for a target object is provided, the apparatus comprising: a candidate target object obtaining module configured to obtain a plurality of candidate target objects based on received user query information; a probability determination module configured to determine, based on a search model trained based on the apparatus according to the second aspect of the present disclosure, a probability that each of the plurality of candidate target objects is a hit for the user query information; and a target object determination module configured to determine, as the target object, a candidate target object with a probability exceeding a probability threshold.

In a fifth aspect of the present disclosure, an electronic device is provided, comprising: one or more processors; and a storage apparatus configured to store one or more programs that, when executed by the one or more processors, cause the one or more processors to implement the method according to the first aspect of the present disclosure.

In a sixth aspect of the present disclosure, a computer-readable storage medium is provided, having a computer program stored thereon, wherein when the program is executed by a processor, the method according to the first aspect of the present disclosure is implemented.

In a seventh aspect of the present disclosure, a computer program product is provided. The computer program product is tangibly stored on a non-transitory computer-readable medium and comprises machine-executable instructions that, when executed, cause a machine to perform the steps of the method according to the first aspect of the present disclosure.

It should be understood that the content described in Summary is not intended to limit critical or important features of the aspects of the present disclosure, nor is it intended to limit the scope of the present disclosure. Other features of the present disclosure will be easily to comprehend from the following description.

Brief Description of the Drawings

The above and other features, advantages, and aspects of various embodiments of the present disclosure will become more apparent in conjunction with the drawings and with reference to the following detailed description. In the accompanying drawings, the same or similar reference numerals represent the same or similar elements.

FIG. 1 is a schematic diagram of an exemplary environment in which a plurality of embodiments of the present disclosure can be implemented;
FIG. 2 is a schematic diagram of a detailed exemplary environment according to an aspect of the present disclosure;
FIG. 3 is a schematic diagram of a knowledge graph according to some aspects of the present disclosure;
FIG. 4 is a flowchart of training a search model according to an aspect of the present disclosure;
FIG. 5 is a flowchart of searching for a target object according to an aspect of the present disclosure;
FIG. 6 is a block diagram of an apparatus for training a search model according to an aspect of the present disclosure; and
FIG. 7 is a block diagram of a computing device that can implement a plurality of aspects of the present disclosure.

Detailed Description

Aspects of the present disclosure will be described in more details below with reference to the accompanying drawings. Although some aspects of the present disclosure are shown in the accompanying drawings, it should be understood that the present disclosure can be implemented in various forms and should not be construed as being limited to the aspects set forth herein. On the contrary, these aspects are provided for a more thorough and complete understanding of the present disclosure. It should be understood that the accompanying drawings and the aspects of the present disclosure are merely for purpose of illustration , and are not intended to limit the scope of protection of the present disclosure.

In the description of the aspects of the present disclosure, the term "comprising" and similar terms should be understood as non-exclusive inclusion, that is, "including but not limited to". The term "based on" should be understood as "at least partially based on". The term "an embodiment" or "the embodiment" should be understood as "at least one embodiment". The terms "first", "second" and the like may refer to different or the same objects. Other explicit and implicit definitions may also be included below.

In a conventional image search method, user query information input by a user is usually received on a server side. A search engine on the server side finds a plurality of candidate images based on the query information, and then inputs these images and the user query information into a pre-trained search model, so that the search model can be used to determine one or more images relatively relevant to the user query information and present the same to the user.

The conventional image search method has at least the following disadvantages: first, since the foregoing plurality of candidate images are all found based on the corresponding user query information, data sets used to train the search model are all positive sample data sets about the user query information. Some training methods comprise other sample data sets, which per se are not associated with a positive sample data set and have relatively coarse granularity, resulting in unstable performance of the trained model and an inaccurate prediction result. In addition, the conventional image search method is not suitable for fine-granularity search, and search results usually are not satisfactory.

As mentioned above, a model training method is urgently required to quickly and efficiently train of a search model, especially an image search model, at low cost, and use the model in turn to determine one or more images relatively relevant to the user query information.

According to an aspect of the present disclosure, a solution for training model is provided. In this solution, a field graph may be automatically constructed for user query information, and images are classified with high precision when there are only positive examples. In addition, an inversion pair learning manner is used to accelerate a convergence speed of a retrieval solution and improve the prediction accuracy thereof. Specifically, a method for training a search model in the present disclosure may comprise: determining, based on user query information input by a user, a positive sample data set used to train the model; and determining an associated item of the query item based on a predetermined knowledge graph, and determining in turn, based on the associated item, a negative sample data set used to train the model. On this basis, the positive sample data set and the negative sample data set can be used as training data sets of the search model. In addition, the embodiments of the present disclosure also comprise searching for an object (such as an image) by using the search model trained based on the foregoing method.

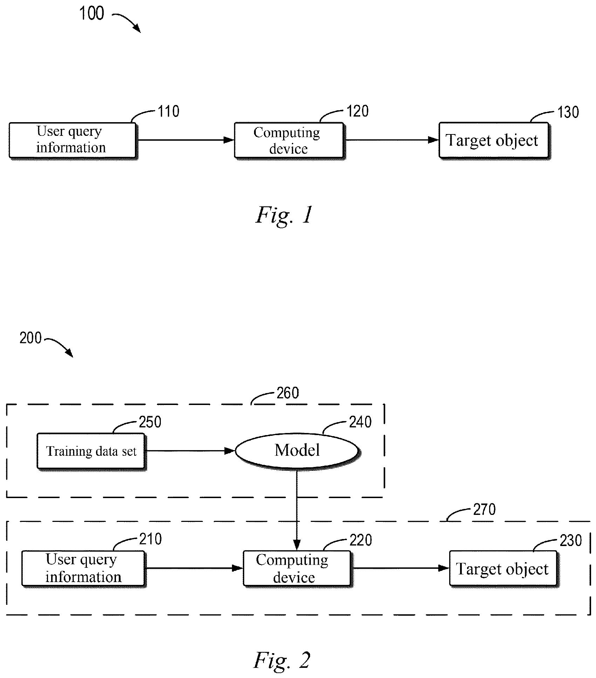

Embodiments of the present disclosure will be described below in details with reference to the accompanying drawings. FIG. 1 is a schematic diagram of an exemplary environment 100 in which a plurality of embodiments of the present disclosure can be implemented. As shown in FIG. 1, the exemplary environment 100 comprises user query information 110, a computing device 120, and a target object 130 predicted by the computing device 120.

The user query information 110 may be query information input by one or more users among a large number of users of a network platform. It should be understood that the "user query information 110" and the "query information" mentioned herein both refer to keyword information input by a user or keyword information extracted from text information input by the users. In the present disclosure, the keyword information mainly comprises entity word information and modifying word information. In some embodiments, keyword information, such as entity word information and modifier information may be extracted based on a semantic recognition model, such as a dependency syntactic parsing model, from the text information input by the user, to determine the user query information 110.

Subsequently, the computing device 120 may determine, through an artificial intelligence network such as a machine learning model loaded therein, the target object 130 corresponding to the user query information 110. Herein, the target object 130 may be an image corresponding to the user query information 110, or an object, such as a video or a web page, that may be found by using a network search engine. For example, the computing device 120 may determine, from a plurality of alternative images, one or more target images relatively relevant to the user query information 110, and present the same to the user as the target object 130.

Hereinafter, a machine learning model is used as an example to describe training and using a model in the computing device 120 with reference to FIG. 2.

FIG. 2 is a schematic diagram of a detailed exemplary environment 200 according to an aspect of the present disclosure. Similar to FIG. 1, the exemplary environment 200 may comprise a computing device 220, user query information 210, and a target object 230. The difference lies in that the exemplary environment 200 may generally comprise a model training system 260 and a model applying system 270. As an example, the model training system 260 and/or the model applying system 270 may be implemented in the computing device 120 shown in FIG. 1 or the computing device 220 shown in FIG. 2. It should be understood that the structure and function of the exemplary environment 200 are described only for exemplary purposes and are not intended to limit the scope of the subject matter described herein. The subject matter described herein may be implemented in environments with different structures and/or functions.

As described above, the process of selecting, from the plurality of candidate target objects retrieved based on the user query information 210, one or more target objects relatively relevant to the user query information 210 may be divided into two phases: a model training phase and a model applying phase. As an example, in the model training phase, the model training system 260 may train, by using a training data set 250, a model 240 that determines a probability; and in the model applying phase, the model applying system 270 may receive the trained model 240, so that the model 240 determines, based on the user query information 210 and the plurality of candidate target objects retrieved by the computing device 220, the target object 230 relatively relevant to the user query information 210. It should be understood that the training data set 250 may be sample query information, and positive and negative sample data sets associated therewith.

In other embodiments, the model 240 may be constructed as a learning network. In some embodiments, the learning network may comprise a plurality of networks, and each network may be a multilayer neural network that may comprise a large number of neurons. Corresponding parameters of the neurons in each network can be determined through a training process. These parameters of the neurons in the network are collectively referred to as parameters of the model 240.

The training process of the model 240 may be performed in an iterative manner. Specifically, the model training system 260 may obtain sample data from the training data set 250, and perform one iteration of the training process by using the sample data, to update corresponding parameters of the model 240. The model training system 260 may perform this process based on a plurality of pieces of sample data in the training data set 250 until at least some of the parameters of the model 240 converge or until a predetermined number of iterations is reached, so that final model parameters are obtained.

It should be understood that in the present disclosure, a positive sample data set can be determined not only based on sample query information (for example, a plurality of images are retrieved as a positive sample data set based on sample query information), but also based on a negative sample data set which is determined based on the additional query information associated with the sample query information. In this way, the number of training data sets are increased. In FIG. 2, a key part of the process of training model 240 is that the additional query information is determined based on a knowledge base. It should be understood that the knowledge base may be a massive information database such as a knowledge graph. As an example, the knowledge base may be created in a form of a knowledge graph based on massive text information in Internet or internal text information of a related institution. The knowledge base in the form of a knowledge graph will be described in details below.

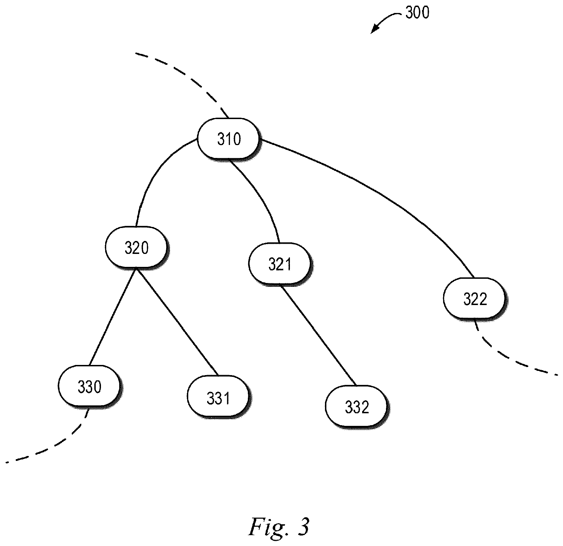

FIG. 3 is a schematic diagram of a knowledge graph 300 according to some aspects of the present disclosure. FIG. 3 comprises a plurality of nodes and a plurality of edges to connect the nodes to represent a relationship between the nodes. For example, a node 310 may represent a specific entity word or modifier, such as "clothing". As shown in FIG. 3, besides the node 310, the knowledge graph 300 further comprises nodes 320, 321, 322, 330, 331, 332, etc. For example, the node 320 may represent a subordinate entity word of the node 310, such as "shoes"; the node 330 may represent a subordinate entity word of the node 320, such as "high-heeled shoes"; and the node 331 may represent another subordinate entity word of the node 320, such as "flat shoes". Similarly, the node 321 may represent another subordinate entity word of the node 310, such as "trousers"; the node 332 may represent a subordinate entity word of the node 321, such as "casual pants"; and the node 322 may represent yet another subordinate entity word of the node 310, such as "dress". In this way, the knowledge graph 300 is used to describe the relationships between the nodes.

After creating the knowledge graph 300 is completed, the computing device 120 may determine, from the knowledge graph 300, a superordinate node or a subordinate node associated with any node, or another associated node. For example, if sample query information is "high-heeled shoes", based on the node 330 corresponding to the "high-heeled shoes", the superordinate node 320 (that is, additional query information "shoes") thereof and another subordinate node 331 (that is, additional query information "flat shoes") of the node 320 may be determined. Based on a determined associated node and corresponding additional query information thereof, the computing device 120 may retrieve a plurality of additional alternative target objects as a negative sample data set used to train the model 240. In this way, the model 240 may be trained based on the sample query information, a determined positive sample data set and negative sample data set.

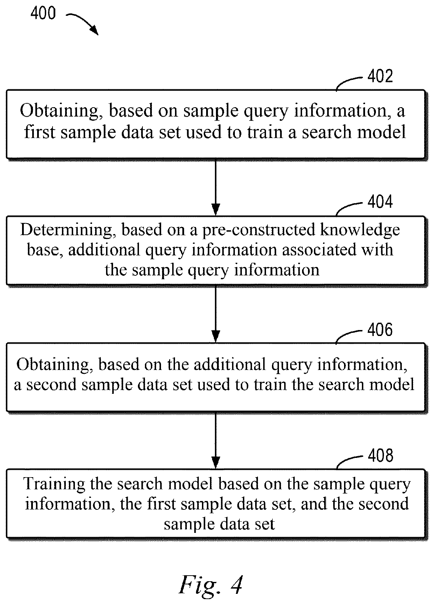

The technical solutions described above are merely for illustration, and are not intended to limit the present disclosure. It should be understood that various networks may alternatively be arranged based on another manner and connection relationship. To explain principles of the foregoing solutions more clearly, the process of training the model 240 will be described in more details below with reference to FIG. 4.

FIG. 4 is a flowchart of a process 400 of training a search model according to an aspect of the present disclosure. In some embodiments, the process 400 may be implemented by the computing device 120 in FIG. 1 and the computing device 220 in FIG. 2. The process 400 of training a model according to this embodiment of the present disclosure is now described with reference to FIG. 4. For ease of understanding, specific instances mentioned in the following description are all exemplary, and not used to limit the scope of protection of the present disclosure.

In 402, the computing device 220 may obtain, based on sample query information, a first sample data set used to train the search model. Take the training of an image search model as an example. After receiving the sample query information, the computing device 220 may retrieve a plurality of images on a network, and these images may be used as a part of the first sample data set for training the image search model. It should be understood that the first sample data set is a positive sample data set.

In 404, the computing device 220 may determine, based on a pre-constructed knowledge base, additional query information associated with the sample query information. It should be understood that the knowledge base may be the knowledge graph 300 or another database. When the knowledge base is the knowledge graph 300, in order to determine the additional query information associated with the sample query information, the computing device 220 may obtain a keyword in the sample query information, determine, from the knowledge graph 300, an additional keyword having a connection with the keyword, and determine in turn the additional query information based on the additional keyword. In this way, a negative sample data set may be constructed by using the knowledge graph in the present disclosure. The negative sample data set is different from and closely related to the positive sample data set. Therefore, high-quality training data sets are provided for model training.

It should be understood that the knowledge graph 300 comprises the foregoing plurality of nodes and plurality of edges used to connect these nodes, and these edges are used to represent a relationship between the nodes.

In some embodiments, to determine the additional keyword from the knowledge graph 300, the computing device 220 may first determine a superordinate node of a "key node", in the knowledge graph 300, corresponding to the keyword in the sample query information. As an example, when the keyword is "high-heeled shoes", the node 330 where the keyword "high-heeled shoes" is located in the knowledge graph 300 may be determined first. Thereby at least the superordinate node 320 of the node 330 can be determined. It should be understood that a keyword corresponding to each node may be an entity word. Alternatively or additionally, the keyword may also be a modifier of an entity word. Subsequently, the computing device 220 may obtain another subordinate node 331, other than the node 330, associated with the superordinate node 320 based on an edge in the foregoing plurality of edges that is connected to the superordinate node 320. As an example, the computing device 220 may determine the another subordinate node 331 of the superordinate node 320. The computing device 220 may identify a keyword corresponding to at least one of the nodes 320 and 331 as the additional keyword. Therefore, it may be determined that the additional query information is "shoes" and "flat shoes". In this way, the negative sample data set associated with the positive sample data set may be determined, and the negative sample data set has great reference value.

In some embodiments, when there does not exist pre-constructed knowledge graph 300, information, such as a related entity word, modifier, context, and synonym, may be mined from the sample query information to construct a knowledge graph in the present disclosure. As an example, dependency syntactic parsing may be performed on the sample query information to obtain a related entity word and modifier, and a corresponding relationship is annotated.

For an entity word or a modifier, a hypernym, a hyponym, a synonym, or an antonym corresponding to the entity word or modifier is obtained by using an existing concept graph. Finally, the knowledge graph 300 is constructed based on the foregoing result.

In 406, the computing device 220 may obtain, based on the additional query information, a second sample data set used to train the search model. It should be understood that the second sample data set is a negative sample data set. As an example, the computing device 220 may determine a keyword corresponding to at least one of the nodes 320 and 331 as the additional keyword. A plurality of images may be retrieved in turn based on, for example, the additional keyword "flat shoes". These images are not of "high-heeled shoes" but are closely related to high-heeled shoes. In this way, sufficient and high-quality negative sample data sets may be provided for training the search model.

In some embodiments, to further improve a data volume of the negative sample data sets, more nodes associated with a node of a keyword may be selected from the knowledge graph 300, and images retrieved based on these nodes are determined as the negative sample data sets. However, to avoid unbalanced samples for model training, a plurality of negative sample data sets may be ranked based on a correlation score between each node and the foregoing key node.

As an example, the computing device 220 may determine a path distance between the keyword and the additional keyword. Herein, the path distance is a quantity of edges between the keyword and the additional keyword. For example, the number of edges between the node 330 and the node 320 is 1. Therefore, a path distance between the keyword "high-heeled shoes" and the additional keyword "shoes" is 1. For another example, the number of edges between the node 330 and the node 331 is 2. Therefore, a path distance between the keyword "high-heeled shoes" and the additional keyword "flat shoes" is 2. It should be understood that there also exists an additional keyword with a path distance greater than 2. In this way, a model training developer may choose less relevant negative samples based on path distances.

To avoid a problem of unbalanced positive and negative samples and a decrease in a model learning capability, the computing device 220 may dynamically sample negative sample data at each level for model training. In some embodiments, when the path distance is less than or equal to a path distance threshold, the negative sample data set may be obtained based on the additional query information. In an early stage of model learning, for each ranking level, negative sample data of each level may be sampled and learned at a ratio of 1 : 1; in a middle stage of model learning, negative sample data sets with a low correlation score may be removed, and sampling and learning are performed by using remaining three or four levels of negative sample data; in a late stage of model learning, sampling and learning are performed by using one or two levels of negative sample data with the highest correlation scores. It should be understood that in the foregoing training process, a data set at each level is randomly selected. A plurality of rounds of training may be performed with reference to the foregoing manner until a model precision change is less than 1%.

Therefore, by determining a correlation score between each node and the key node, an image corresponding to an additional keyword, which is relatively relevant to the keyword, may be preferentially selected as a negative sample data set, thereby the quality of a training data set is optimized.

In 408, the computing device 220 may train the search model based on the foregoing sample query information, negative sample data set, and positive sample data set. As an example, a training process is optimized in an inversion pair manner in the present disclosure. For example, the computing device 220 may determine, based on the sample query information and a positive sample in the positive sample data set, a first probability that the positive sample is a hit for the sample query information; and determine, based on the sample query information and a negative sample in the negative sample data set, a second probability that the negative sample is a hit for the sample query information. Subsequently, the first probability is compared with the second probability. If the first probability is less than the second probability, that is, if the probability that the positive sample is a hit for the sample query information is less than the probability that the negative sample is a hit for the sample query information, it indicates that the model has a relatively large error. Therefore, the parameters of the search model may be further optimized to update the first probability and the second probability, until the updated first probability is greater than the updated second probability.

Specifically, the training process may be optimized by improving a loss function. For example, a first loss function may be defined as below in a form of cross entropy:

$$L_{\text{loss}-1} = label * \log(p) + (1 - label) * \log(1 - p) \tag{1}$$

In the equation, if label is a positive sample, it is 1; otherwise, the label is 0; and p is a probability that a prediction result is a positive sample.

In addition, inversion pair-based learning may be implemented by further defining a second loss function as below:

$$L_{loss-2} = \max(0, \ P_{neg} - P_{pos} \ + margin) \tag{2}$$

In the equation, $P_{pos}$ is a probability that a prediction result is a positive sample, $P_{neg}$ is a probability that a prediction result is a negative sample, and margin may be set to 0.1. That is, when the probability that the prediction result is a negative sample is greater than or equal to the probability that the prediction result is a positive sample, it indicates that the prediction result is incorrect. In this case, the second loss function $L_{loss-2}$ is assigned to be greater than zero, so that a model parameter may be further optimized.

Alternatively or additionally, inversion pair-based learning may be implemented by defining the second loss function as below:

$$L_{loss-2} = -label \ * \log(pro) - (1 - label) * \log(1 - pro) \tag{3}$$

$$pro \ = \ {}^{1}\!/_{(1 + \exp(-v \,*(P_{pos} - P_{neg} \ - \tau)))} \tag{4}$$

In the equations, $P_{pos}$ is a probability that a prediction result is a positive sample, $P_{neg}$ is a probability that a prediction result is a negative sample, T may be set to 0.1, and v may be set to 5.

By performing, for example, a weighted average operation on the foregoing two loss functions, an optimized target loss function may be obtained:

$$L_{loss} = \ 0.1 \ * L_{loss-1} + 0.9 \ * \ L_{loss-2} \tag{5}$$

According to the foregoing embodiment, the target loss function used to optimize training is designed in the present disclosure. Compared with a conventional loss function, not only it is determined whether the probability that the positive sample is a hit for the sample query information is greater than a probability threshold based on the target loss function in the present disclosure, but also the probability that the positive sample is a hit for the sample query information is compared with the probability that the negative sample is a hit for the sample query information, thereby the model training process is implemented more meticulously and accuratel y.

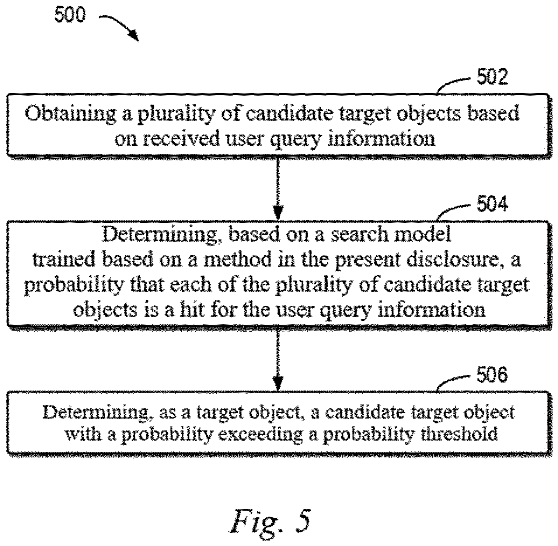

FIG. 5 illustrates a flowchart of a process 500 of searching for a target object according to an aspect of the present disclosure. In some embodiments, the process 500 may be implemented by the computing device 120 in FIG. 1 and the computing device 220 in FIG. 2. The process 500 of searching for a target object according to this embodiment of the present disclosure is now described with reference to FIG. 5. For ease of understanding, specific instances mentioned in the following description are all exemplary and are not used to limit the scope of protection of the present disclosure.

As shown in FIG. 5, in 502, the computing device 220 may obtain a plurality of candidate target objects based on received user query information 210. The computing device 220 may be provided on a server side, and is configured with a search module configured to obtain the candidate target objects based on the user query information 210. In addition, the computing device 220 is further configured with the model 240 trained with reference to the method described in FIG. 4.

In 504, the computing device 220 may determine, based on the model 240, a probability that each of the plurality of alternative target objects is a hit for the user query information 210. In addition, in 506, the computing device 220 may determine an alternative target object, as the target object 230, with a probability exceeding a probability threshold.

In some embodiments, the target object may be an image, a video, a web page, or another object that may be searched for based on text.

In this way, a more accurate search result may be provided to a user by using the model 240, thereby the user experience is improved as a whole.

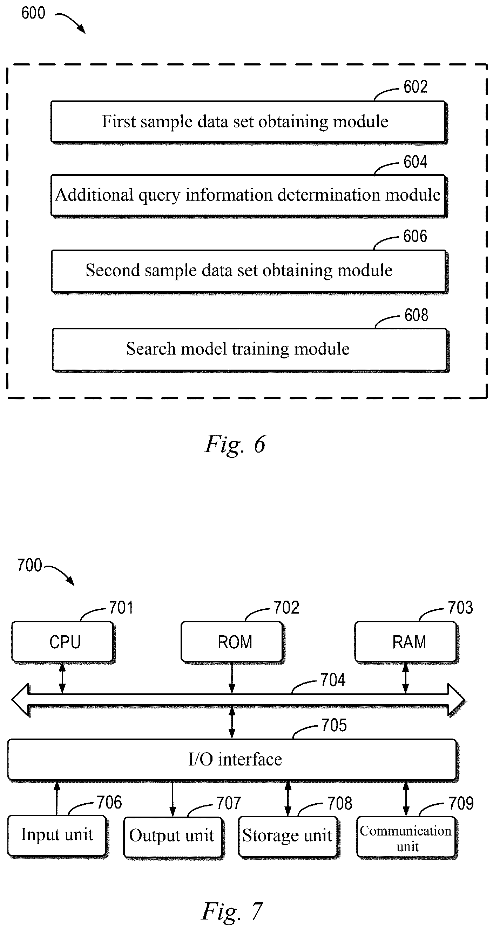

FIG. 6 is a block diagram of an apparatus 600 for training a search model according to an aspect of the present disclosure. As shown in FIG. 6, the apparatus 600 may comprise: a first sample data set obtaining module 602 configured to obtain, based on sample query information, a first sample data set used to train the search model; an additional query information determination module 604 configured to determine, based on a pre-constructed knowledge base, additional query information associated with the sample query information; a second sample data set obtaining module 606 configured to obtain, based on the additional query information, a second sample data set used to train the search model, wherein the second sample data set is different from the first sample data set; and a search model training module 608 configured to train the search model based on the sample query information, the first sample data set, and the second sample data set.

In some embodiments, the knowledge base is a knowledge graph, and the additional query information determination module may comprise: a keyword obtaining module configured to obtain a keyword in the sample query information; an additional keyword obtaining module configured to determine, from the knowledge graph, an additional keyword having a connection relationship with the keyword; and an information obtaining module configured to determine the additional query information based on the additional keyword.

In some embodiments, the knowledge graph comprises a plurality of nodes and a plurality of edges to connect the plurality of nodes, the plurality of edges are used to represent a relationship between the plurality of nodes, and the additional keyword obtaining module may comprise: a superordinate node determination module configured to determine a superordinate node of a key node corresponding to the keyword in the knowledge graph; an additional node determination module configured to obtain, based on an edge in the plurality of edges that is connected to the superordinate node, at least one node associated with the superordinate node, wherein the at least one node is different from the key node; and an additional keyword determination module configured to determine a keyword corresponding to the at least one node as the additional keyword.

In some embodiments, the additional query information determination module may further comprise: a path distance determination module configured to determine a path distance between the keyword and the additional keyword, wherein the path distance is a quantity of edges between the keyword and the additional keyword.

In some embodiments, the second sample data set obtaining module may comprise: a data set obtaining module configured to obtain the second sample data set based on the additional query information in response to the path distance being less than or equal to a path distance threshold.

In some embodiments, the search model training module may comprise: a first probability determination module configured to determine, based on the sample query information and a first sample in the first sample data set, a first probability that the first sample is a hit for the sample query information; a second probability determination module configured to determine, based on the sample query information and a second sample in the second sample data set, a second probability that the second sample is a hit for the sample query information; and a parameter optimization module configured to: in response to the first probability being less than or equal to the second probability, optimize a parameter of the search model to update the first probability and the second probability, so that the updated first probability is greater than the updated second probability.

In some embodiments, the keyword is an entity word or a modifier of the entity word.

In some embodiments, the first sample data set and the second sample data set are both image data sets.

In some embodiments, the first sample data set is a positive sample data set, and the second sample data set is a negative sample data set.

FIG. 7 is a block diagram of a computing device 700 that can implement a plurality of embodiments of the present disclosure. The device 700 may be configured to implement the computing device 120 in FIG. 1 or the computing device 220 in FIG. 2. As shown in the figure, the device 700 comprises a central processing unit (CPU) 701, which may perform various appropriate actions and processing according to computer program instructions stored in a read-only memory (ROM) 702 or computer program instructions loaded from a storage unit 708 to a random access memory (RAM) 703. The RAM 703 may further be used to store various programs and data required for the operation of the device 700. The CPU 701, the ROM 702, and the RAM 703 are connected to each other through a bus 704. An input/output (I/O) interface 705 is also connected to the bus 704.

A plurality of components in the device 700 are connected to the I/O interface 705 including: an input unit 706, such as a keyboard or a mouse; an output unit 707, such as various types of displays or speakers; a storage unit 708, such as a magnetic disk or an optical disc; and a communication unit 709, such as a network interface card, a modem, or a wireless communication transceiver. The communication unit 709 allows the device 700 to exchange information/data with other devices through a computer network, such as the Internet, and/or various telecommunications networks.

The processing unit 701 performs the various methods and processing described above, such as the processes 400 and 500. For example, in some embodiments, the processes 400 and 500 may be implemented as computer software programs, which are tangibly contained in a machine-readable storage medium, such as the storage unit 708. In some embodiments, a part or all of the computer programs may be loaded and/or installed onto the device 700 via the ROM 702 and/or the communication unit 709. When the computer program is loaded into the RAM 703 and executed by the CPU 701, one or more steps of the processes 400 and 500 described above may be performed. Alternatively, in another embodiment, the CPU 701 may be configured, by any other suitable means (for example, by means of firmware), to perform the processes 400 and 500.

The functions described herein above may be performed at least partially by one or more hardware logic components. For example, without limitation, exemplary types of hardware logic components that may be used comprise:

a field programmable gate array (FPGA), an application-specific integrated circuit (ASIC), an application-specific standard product (ASSP), a system-on-chip (SOC) system, a complex programmable logic device (CPLD), and the like.

Program codes used to implement the method of the present disclosure can be written in any combination of one or more programming languages. These program codes may be provided to a processor or a controller of a general-purpose computer, a special-purpose computer, or other programmable data processing apparatuses, such that when the program codes are executed by the processor or the controller, the functions/operations specified in the flowcharts and/or block diagrams are implemented. The program codes may be completely executed on a machine, or partially executed on a machine, or may be, as an independent software package, partially executed on a machine and partially executed on a remote machine, or completely executed on a remote machine or a server.

In the context of the present disclosure, the machine-readable storage medium may be a tangible medium, which may contain or store a program for use by an instruction execution system, apparatus, or device, or for use in combination with the instruction execution system, apparatus, or device. The machine-readable storage medium may be a machine-readable signal medium or a machine-readable storage medium. The machine-readable storage medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof.

In addition, although the operations are described in a particular order, it should be understood as requiring these operations to be performed in the shown particular order or in a sequential order, or requiring all the illustrated operations to be performed to achieve a desired result. Under certain circumstances, multitasking and parallel processing may be advantageous. Similarly, although several specific implementation details are comprised in the foregoing discussions, these details should not be construed as limiting the scope of the present disclosure. Some features described in the context of separate embodiments may alternatively be implemented in combination in a single embodiment. In contrast, various features described in the context of a single implementation may alternatively be implemented in a plurality of implementations individually or in any suitable subcombination.

Although the subject matter has been described in languages particular to structural features and/or logical actions of the method, it should be understood that the subject matter defined in the appended claims is not necessarily limited to the specific features or actions described above. On the contrary, the particular features and actions described above are merely examples for implementing the claims.

## Claims

**1.** A computer-implemented method for training a search model, the method comprising:

obtaining (402), by one or more computers (120, 220), based on sample query information, a first sample data set for training the search model;
determining (404), by one or more computers (120, 220), based on a pre-constructed knowledge base, additional query information associated with the sample query information;
obtaining (406), by one or more computers (120, 220), based on the additional query information, a second sample data set for training the search model, wherein the second sample data set is different from the first sample data set; and
training (408), by one or more computers (120, 220), the search model based on the sample query information, the first sample data set, and the second sample data set.

**2.** The method according to claim 1, wherein the knowledge base is a knowledge graph, and determining, based on the knowledge base, the additional query information associated with the sample query information comprises:

obtaining a keyword in the sample query information;
determining, from the knowledge graph, an additional keyword having a connection relationship with the keyword; and
determining the additional query information based on the additional keyword.

**3.** The method according to claim 2, wherein the knowledge graph comprises a plurality of nodes and a plurality of edges to connect the plurality of nodes, and wherein the plurality of edges are for representing a relationship between the plurality of nodes, and determining the additional keyword from the knowledge graph comprises:

determining a superordinate node of a key node corresponding to the keyword in the knowledge graph;
obtaining, based on an edge in the plurality of edges that is connected to the superordinate node, at least one node associated with the superordinate node, wherein the at least one node is different from the key node; and
determining a keyword corresponding to the at least one node as the additional keyword.

4. The method according to claim 3, wherein determining, based on the knowledge base, the additional query information associated with the sample query information further comprises:
determining a path distance between the keyword and the additional keyword, wherein the path distance is a quantity of edges between the keyword and the additional keyword.

5. The method according to claim 4, wherein obtaining, based on the additional query information, the second sample data set for training the search model comprises:
obtaining the second sample data set based on the additional query information in response to the path distance being less than or equal to a path distance threshold.

6. The method according to claim 1, wherein training the search model comprises:

determining, based on the sample query information and a first sample in the first sample data set, a first probability that the first sample is a hit for the sample query information;
determining, based on the sample query information and a second sample in the second sample data set, a second probability that the second sample is a hit for the sample query information; and
in response to the first probability being less than or equal to the second probability, optimizing parameters of the search model to update the first probability and the second probability, wherein the updated first probability is greater than the updated second probability.

7. The method according to claim 1, wherein the keyword is an entity word or a modifier of the entity word.

8. The method according to claim 1, wherein the first sample data set and the second sample data set are both image data sets.

9. The method according to claim 1, wherein the first sample data set is a positive sample data set, and the second sample data set is a negative sample data set.

10. The method according to any one of claims 1 to 9, further comprising:

obtaining a plurality of alternative target objects based on received user query information;
determining, based on the trained search model, a probability that each of the plurality of alternative target objects hits the user query information; and
determining, as the target object, an alternative target object with a probability exceeding a probability threshold.

11. The method according to claim 10, wherein the target object is an image.

12. A device (600) for training a search model, comprising:

a first sample data set obtaining module (602), configured to obtain, based on sample query information, a first sample data set for training the search model;
additional query information determining module (604), configured to determine, based on a pre-constructed knowledge base, additional query information associated with the sample query information;
a second sample data set obtaining module (606), configured to obtain, based on the additional query information, a second sample data set for training the search model, wherein the second sample data set is different from the first sample data set; and
search model training module (608), configured to train the search model based on the sample query information, the first sample data set, and the second sample data set.

13. An electronic device (700), comprising:

one or more processors (701); and
a storage apparatus (702, 703) configured to store one or more programs that, when executed by the one or more processors, cause the one or more processors to implement the method according to any one of claims 1 to 11.

14. A computer-readable storage medium, having a computer program stored thereon, wherein when the program is executed by a processor, the method according to any one of claims 1 to 11 is implemented.

15. A computer program product, comprising computer program instructions, which when executed by a processor, causing the processor to perform the method of any of claims 1 to 11.

100

User query
information — 110

Computing
device — 120

Target object — 130

*Fig. 1*

200

260

Training data set — 250

Model — 240

270

User query
information — 210

Computing
device — 220

Target object — 230

*Fig. 2*

*Fig. 3*

400

┌─────────────────────────────────────────┐ 402
│ Obtaining, based on sample query information, a │
│ first sample data set used to train a search model │
└─────────────────────────────────────────┘

┌─────────────────────────────────────────┐ 404
│ Determining, based on a pre-constructed knowledge │
│ base, additional query information associated with │
│ the sample query information │
└─────────────────────────────────────────┘

┌─────────────────────────────────────────┐ 406
│ Obtaining, based on the additional query information, │
│ a second sample data set used to train the search model │
└─────────────────────────────────────────┘

┌─────────────────────────────────────────┐ 408
│ Training the search model based on the sample query │
│ information, the first sample data set, and the second │
│ sample data set │
└─────────────────────────────────────────┘

*Fig. 4*

500

502

Obtaining a plurality of candidate target objects based on received user query information

504

Determining, based on a search model trained based on a method in the present disclosure, a probability that each of the plurality of candidate target objects is a hit for the user query information

506

Determining, as a target object, a candidate target object with a probability exceeding a probability threshold

*Fig. 5*

600

602

First sample data set obtaining module

604

Additional query information determination module

606

Second sample data set obtaining module

608

Search model training module

Fig. 6

700

701

CPU

702

ROM

703

RAM

704

705

I/O interface

706

Input unit

707

Output unit

708

Storage unit

709

Communication unit

Fig. 7